(19) Europäisches Patentamt
European Patent Office
Office européen des brevets

(11) **EP 4 422 132 A1**

(12) **EUROPEAN PATENT APPLICATION**
published in accordance with Art. 153(4) EPC

(43) Date of publication:
**28.08.2024  Bulletin 2024/35**

(21) Application number: **22882912.3**

(22) Date of filing: **19.10.2022**

(51) International Patent Classification (IPC):
**H04L 25/02** *(2006.01)*

(52) Cooperative Patent Classification (CPC):
**H04B 7/0413; H04L 25/02**

(86) International application number:
**PCT/CN2022/126226**

(87) International publication number:
**WO 2023/066307 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.10.2021  CN 202111234895**

(71) Applicant: **Vivo Mobile Communication Co., Ltd.
Dongguan, Guangdong 523863 (CN)**

(72) Inventors:
• LI, Jianjun
  Dongguan, Guangdong 523863 (CN)
• SONG, Yang
  Dongguan, Guangdong 523863 (CN)
• SUN, Peng
  Dongguan, Guangdong 523863 (CN)
• YANG, Ang
  Dongguan, Guangdong 523863 (CN)

(74) Representative: **Lavoix
Bayerstraße 83
80335 München (DE)**

(54) **CHANNEL ESTIMATION METHOD AND APPARATUS, AND TERMINAL AND NETWORK-SIDE DEVICE**

(57)    This application discloses a channel estimation method and apparatus, a terminal, and a network-side device, and relates to the field of communication technologies. The channel estimation method includes: receiving, by a terminal, a pilot signal sent by a network-side device, where resource blocks RBs occupied by the pilot signal in a first time domain transmission unit and RBs occupied by the pilot signal in a second time domain transmission unit are at least partially different; and performing channel estimation on a third time domain transmission unit based on the pilot signal in the first time domain transmission unit and the pilot signal in the second time domain transmission unit. Technical solutions of embodiments of this application can reduce pilot overheads, and improve precision of channel estimation and prediction, thereby improving performance of a communication system.

EP 4 422 132 A1

A terminal receives a pilot signal sent by a network-side device, where resource blocks RBs occupied by the pilot signal in a first time domain transmission unit and RBs occupied by the pilot signal in a second time domain transmission unit are at least partially different — 101

Perform channel estimation on a third time domain transmission unit based on the pilot signal in the first time domain transmission unit and the pilot signal in the second time domain transmission unit — 102

FIG. 2

**Description**

**CROSS-REFERENCE TO RELATED APPLICATIONS**

This application claims priority to Chinese Patent Application No. 202111234895.1 filed in China on October 22, 2021, which is incorporated herein by reference in its entirety.

**TECHNICAL FIELD**

This application relates to the field of communication technologies, and specifically, to a channel estimation method and apparatus, a terminal, and a network-side device.

**BACKGROUND**

A large-scale antenna array formed by using a large-scale multiple input multiple output (Multiple Input Multiple Output, MIMO) technology may support more users to send and receive signals at the same time, so that a channel capacity and data traffic of a mobile network are increased by ten times or more, and interference between multiple users can be sharply reduced.

However, in a large-scale MIMO system, as a scale of antennas increases sharply, pilot overheads and complexity of channel estimation are increased in magnitude. This has become one of key bottlenecks restricting large-scale MIMO from becoming commercially available on a large scale.

In an existing communication system, a pilot channel state information reference signal (Channel State Information Reference Signal, CSI-RS) is sent by using a resource block (Resource Block, RB) as a basic unit. Each resource block RB includes 12 subcarriers in frequency domain, and includes 6 to 7 orthogonal frequency division multiplex (Orthogonal Frequency Division Multiplex, OFDM) symbols in time domain. The CSI-RS is sent on each RB, which causes large pilot overheads and affects performance of the communication system.

**SUMMARY**

Embodiments of this application provide a channel estimation method and apparatus, a terminal, and a network-side device, so that pilot overheads can be reduced, thereby improving performance of a communication system.

According to a first aspect, an embodiment of this application provides a channel estimation method, including:

receiving, by a terminal, a pilot signal sent by a network-side device, where resource blocks RBs occupied by the pilot signal in a first time domain transmission unit and RBs occupied by the pilot signal in a second time domain transmission unit are at least partially different; and
performing channel estimation on a third time domain transmission unit based on the pilot signal in the first time domain transmission unit and the pilot signal in the second time domain transmission unit.

According to a second aspect, an embodiment of this application provides a channel estimation method, including:
sending, by a network-side device, a pilot signal, where resource blocks RBs occupied by the pilot signal in a first time domain transmission unit and RBs occupied by the pilot signal in a second time domain transmission unit are at least partially different.

According to a third aspect, an embodiment of this application provides a channel estimation apparatus, used in a terminal, and the apparatus includes:

a channel estimation module, configured to receive a pilot signal sent by a network-side device, where resource blocks RBs occupied by the pilot signal in a first time domain transmission unit and RBs occupied by the pilot signal in a second time domain transmission unit are at least partially different; and
a channel estimation module, configured to perform channel estimation on a third time domain transmission unit based on the pilot signal in the first time domain transmission unit and the pilot signal in the second time domain transmission unit.

According to a fourth aspect, an embodiment of this application provides a channel estimation apparatus, used in a network-side device, and the apparatus includes:
a sending module, configured to send a pilot signal, where resource blocks RBs occupied by the pilot signal in a first time domain transmission unit and RBs occupied by the pilot signal in a second time domain transmission unit are at least partially different.

According to a fifth aspect, a terminal is provided, where the terminal includes a processor, a memory, and a program or instructions stored in the memory and runnable on the processor, where when executed by the processor, the program or the instructions implement steps of the method according to the first aspect.

According to a sixth aspect, a terminal is provided, including a processor and a communication interface, where the communication interface is configured to receive a pilot signal sent by a network-side device, where resource blocks RBs occupied by the pilot signal in a first time domain transmission unit and RBs occupied by the pilot signal in a second time domain transmission unit are at least partially different; and the processor is configured to perform channel estimation on a third time domain transmission unit based on the pilot signal in the first time domain transmission unit and the pilot signal in the second time domain transmission unit.

According to a seventh aspect, a network-side device is provided, where the network-side device includes a processor, a memory, and a program or instructions stored in the memory and runnable on the processor, where when executed by the processor, the program or the instructions implement steps of the method according to the second aspect.

According to an eighth aspect, a network-side device is provided, including a processor and a communication interface. The communication interface is configured to send a pilot signal, where resource blocks RBs occupied by the pilot signal in a first time domain transmission unit and RBs occupied by the pilot signal in a second time domain transmission unit are at least partially different

According to a ninth aspect, a readable storage medium is provided, where the readable storage medium stores a program or instructions, where when executed by the processor, the program or the instructions implement steps of the method according to the first aspect, or implements steps of the method according to the second aspect.

According to a tenth aspect, a chip is provided, where the chip includes a processor and a communication interface, the communication interface is coupled to the processor, and the processor is configured to run a program or instructions, to implement the method according to the first aspect, or to implement the method according to the second aspect.

According to an eleventh aspect, a computer program product is provided, where the computer program product is stored in a non-transitory storage medium, and is executed by at least one processor to implement steps of the method according to the first aspect or the second aspect.

In the embodiments of this application, a network-side device sends a pilot signal to a terminal, where resource blocks RBs occupied by the pilot signal in a first time domain transmission unit and RBs occupied by the pilot signal in a second time domain transmission unit are at least partially different. In this way, the pilot signal is only sent on a part of RBs, so that pilot overheads can be reduced, thereby improving performance of a communication system.

## BRIEF DESCRIPTION OF THE DRAWINGS

FIG. 1 is a schematic diagram of a wireless communication system;
FIG. 2 is a schematic flowchart of a channel estimation method performed by a terminal according to an embodiment of this application;
FIG. 3 is a schematic flowchart of a channel estimation method performed by a network-side device according to an embodiment of this application;
FIG. 4 and FIG. 5 are schematic diagrams of sending a CSI-RS according to an embodiment of this application;
FIG. 6 is a schematic structural diagram of a channel estimation apparatus used in a terminal according to an embodiment of this application;
FIG. 7 is a schematic structural diagram of a channel estimation apparatus used in network-side device according to an embodiment of this application;
FIG. 8 is a schematic composition diagram of a communication device according to an embodiment of this application;
FIG. 9 is a schematic composition diagram of a terminal according to an embodiment of this application;
FIG. 10 is a schematic composition diagram of a network-side device according to an embodiment of this application;
FIG. 11 is a diagram of an informer network structure;
FIG. 12 is a schematic diagram of a multi-head attention (multi-head attention) mechanism; and
FIG. 13 is a schematic diagram of a masked multi-head attention (masked multi-head attention) mechanism.

## DETAILED DESCRIPTION

With reference to the accompanying drawings in the embodiments of this application, technical solutions in the embodiments of this application are clearly described below. Apparently, the described embodiments are some embodiments of this application rather than all embodiments. Based on the embodiments of this application, all other embodiments obtained by a person of ordinary skill in the art shall fall within the protection scope of this application.

Terms "first" and "second" in the specification and claims of this application are intended to distinguish between similar objects, but do not necessarily indicate a particular order or sequence. It should be understood that the terms used in such a way are interchangeable in proper cases, so that the embodiments of this application can be implemented in an order other than those illustrated or described herein. In addition, objects different from "first" and "second" are generally a class, and do not define a quantity of the objects. For example, the quantity of a first object may be one, and may also be more. In addition, "and/or" in the specification and the claims indicates at least one of connected objects, and a character "/" generally indicates that associated object is an "or" relationship.

It is worth noting that technologies described in the embodiments of this application are not limited to a long term evolution (Long Term Evolution, LTE)/LTE-advanced (LTE-Advanced, LTE-A) system, and may also be applied to another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). Terms "system" and "network" in the embodiments of this application are commonly used interchangeably, and the described technologies may be applied to the foregoing systems and radio technologies, and may also be applied to other systems and radio technologies. The following description describes a new radio (New Radio, NR) system for an example purpose, and an NR term is used in most of the following description. However, those technologies may also be applied to an application other than an NR system application, such as a 6th Generation (6th Generation, 6G) communication system.

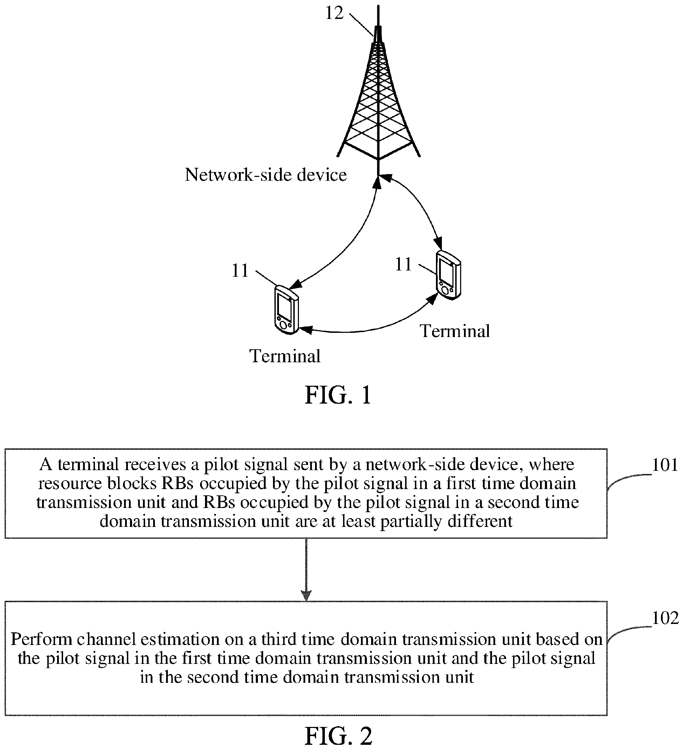

FIG. 1 is a block diagram of a communication system to which an embodiment of this application is applicable. The wireless communication system includes a terminal 11 and a network-side device 12. The terminal 11 may also be referred to as a terminal device or a user equipment (User Equipment, UE), and the terminal 11 may be a terminal-side device, such as a mobile phone, a tablet personal computer (Tablet Personal Computer), a laptop computer (Laptop Computer) or also referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or a vehicle user equipment (Vehicle User Equipment, VUE), and a pedestrian user equipment (Pedestrian User Equipment, PUE). The wearable device includes a smart watch, a bracelet, earphones, glasses, and the like. It should be noted that a specific type of the terminal 11 is not limited in this embodiment of this application. The network-side device 12 may be a base station or a core network, and the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, WiFi) node, a transmitting receiving point (Transmitting Receiving Point, TRP), or some other suitable terms in the field. As long as a same technical effect is achieved, the base station is not limited to a particular technical term. It should be noted that only a base station in the NR system is used as an example in the embodiments of this application, but a specific type of the base station is not limited. A core network device may be a location management device, for example, a location management function (a location management function (Location Management Function, LMF) and an evolutionary-service mobile location center (Evolutionary-Service Mobile Location Center E-SMLC)).

A large-scale antenna array formed by using a large-scale MIMO technology may support more users to send and receive signals at the same time, so that a channel capacity and data traffic of a mobile network are increased by ten times or more, and interference between multiple users can be sharply reduced. Therefore, it has been receiving sustained and high attention from researchers since its proposal. To support broadband wireless communication, starting from 4G, OFDM becomes an underlying technology of mobile communication. According to this technology, multipath interference can be effectively resisted, and a frequency domain frequency selective channel is divided into a plurality of flat fading subchannels to support wireless transmission. A combination of the OFDM and the large-scale MIMO has become a basic framework for current and future wireless communication.

However, in a large-scale MIMO system, as a scale of antennas increases sharply, pilot overheads and complexity of channel estimation are increased in magnitude. This has become one of key bottlenecks restricting large-scale MIMO from becoming commercially available on a large scale.

In an existing communication system, a pilot channel state information reference signal CSI-RS is sent by using a resource block RB as a basic unit. Each resource block RB includes 12 subcarriers in frequency domain, and includes 6 to 7 OFDM symbols in time domain. The CSI-RS is sent on each RB. To reduce pilot overheads, a pilot signal CSI-RS is not sent in each transmission time interval (Transmission Time Interval, TTI), but is sent once every a plurality of TTIs. Therefore, in a TTI not for sending the CSI-RS, an actual large-scale MIMO channel cannot be known. For this, in related technologies, a channel estimated by using a closest TTI for sending the CSI-RS is generally used as a channel of a current TTI, to find optimal precoding from a codebook. Because the channel is variable, a deviation exists between the channel estimated by the closest TTI for sending the CSI-RS and the channel of the current TTI. In addition, a faster movement speed indicates a larger deviation. As a result, a deviation between a channel feedback and a precoding operation of a transmit end is caused, leading to reduction of system performance.

An embodiment of this application provides a channel estimation method, performed by a terminal. As shown in FIG. 2, the method includes the following steps:

> Step 101: The terminal receives a pilot signal sent by a network-side device, where resource blocks RBs occupied by the pilot signal in a first time domain transmission unit and RBs occupied by the pilot signal in a second time domain transmission unit are at least partially different; and
>
> Step 102: Perform channel estimation on a third time domain transmission unit based on the pilot signal in the first time domain transmission unit and the pilot signal in the second time domain transmission unit.

The third time domain transmission unit may be the same as or may be different from the first time domain transmission unit; the third time domain transmission unit may be the same as or may be different from the second time domain transmission unit; and the first time domain transmission unit and the second time domain transmission unit are different time domain transmission units.

In this embodiment of this application, a terminal receives a pilot signal sent by a network-side device, where resource blocks RBs occupied by the pilot signal in a first time domain transmission unit and RBs occupied by the pilot signal in a second time domain transmission unit are at least partially different. In other words, the network-side device sends the pilot signal only on a part of RBs, so that pilot overheads can be reduced. In addition, if a quantity of RBs for sending the pilot signal does not change, because the pilot signal is only sent on a part of RBs in a time domain transmission unit, time domain transmission units for sending the pilot signal can be increased, and an interval between the time domain transmission units for sending pilot signals can be reduced, so that precision of channel estimation can be improved, thereby improving performance of a communication system.

In some embodiments, the performing channel estimation on a third time domain transmission unit based on the pilot signal in the first time domain transmission unit and the pilot signal in the second time domain transmission unit includes:

performing channel estimation based on the pilot signal in the first time domain transmission unit, the pilot signal in the second time domain transmission unit, and a pre-trained neural network model, to obtain channels on all RBs in the third time domain transmission unit.

In this embodiment, by using the pilot signal in the first time domain transmission unit and the pilot signal in the second time domain transmission unit, a channel on an RB not for sending the pilot signal can be obtained. Because the RB for sending the pilot signal and the RB not for sending the pilot signal may be located in a same time domain transmission unit, correlation is very high. Therefore, precision of channel estimation can be improved, thereby improving performance of the communication system.

In some embodiments, the performing channel estimation on a third time domain transmission unit based on the pilot signal in the first time domain transmission unit and the pilot signal in the second time domain transmission unit includes:

performing channel estimation based on the pilot signal in the first time domain transmission unit, the pilot signal in the second time domain transmission unit, and a pre-trained neural network model, to obtain channels on all RBs in L time domain transmission units after a current time domain transmission unit, where L is a positive integer.

In this embodiment, by using the pilot signal in the first time domain transmission unit and the pilot signal in the second time domain transmission unit, a subsequent channel can also be predicated, and a channel without a pilot case in the future can be predicted, so that pilot overheads are greatly reduced, thereby improving performance of the system.

In some embodiments, all the RBs are RBs determined according to a predefined rule or a pre-configuration manner.

In some embodiments, the RBs determined according to the predefined rule or the pre-configuration manner include at least the RBs occupied by the pilot signal in a first time domain transmission unit and the RBs occupied by the pilot signal in a second time domain transmission unit.

To ensure precision of channel estimation and channel prediction, channel estimation is performed by using pilot signals in nearest K time domain transmission units for sending pilot signals, and K is a positive integer. In other words, channel estimation is performed by using the current time domain transmission unit and K-1 time domain transmission units for sending pilot signals before the current time domain transmission unit.

In some embodiments, the pilot signal is sent on a half of RBs, and that the terminal receives a pilot signal sent by a network-side device includes:

> receiving, by the terminal, the pilot signal sent by the network-side device on a first RB in the first time domain transmission unit; and

receiving, by the terminal, the pilot signal sent by the network-side device on a second RB in the second time domain transmission unit, where

the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

In this embodiment, pilot signals are not sent in all time domain transmission units, but the pilot signals are sent every one or more time domain transmission units, and if a quantity of RBs for sending the pilot signal in each time domain transmission unit is unchanged, pilot overheads can be reduced.

In some embodiments, a number of the first RB is even, and a number of the second RB is odd; or the number of the first RB is odd, and the number of the second RB is even.

For example, if an RB with a number being odd is selected for receiving a pilot signal in a time domain transmission unit for sending the pilot signal, an RB with a number being even is selected for receiving the pilot signal in a next time domain transmission unit for sending the pilot signal. Alternatively, if an RB with a number being even is selected for receiving a pilot signal in a time domain transmission unit for sending the pilot signal, an RB with a number being odd is selected for receiving the pilot signal in a next time domain transmission unit for sending the pilot signal.

In this embodiment, a step of training to obtain a neural network model is further included, and the step of training to obtain the neural network model includes at least one of the following:

an establishing step: establishing a neural network initial model;

a training step: training the neural network initial model by using training data, to obtain a trained neural network initial model, where the training data includes input data of the neural network initial model and corresponding actual channel data, the input data is channel estimation results of K consecutive time domain transmission units for sending pilot signals, a length of the channel estimation result of each time domain transmission unit is $M \times N$, an output of the neural network initial model is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network initial model and the corresponding actual channel data is greater than or equal to a preset threshold or does not reach a preset quantity of iterations, returning to the training step; and if the mean square error between the output of the trained neural network initial model and the corresponding actual channel data is less than the preset threshold or reaches the preset quantity of iterations, using the trained neural network initial model as the neural network model.

In some embodiments, the step of training to obtain the neural network model includes at least one of the following:

a training step: training the neural network model obtained by last training by using training data, to obtain a trained neural network model, where the training data includes input data of the neural network model obtained by the last training and corresponding actual channel data, the input data is channel estimation results of K consecutive time domain transmission units for sending pilot signals, a length of a channel estimation result of each time domain transmission unit is $M \times N$, an output of the neural network model obtained by the last training is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network model and the corresponding actual channel data is greater than or equal to the preset threshold or does not reach the preset quantity of iterations, returning to the training step; and if the mean square error between the output of the trained neural network model and the corresponding actual channel data is less than the preset threshold or reaches the preset quantity of iterations, using the trained neural network model as the neural network model.

The neural network model includes a first neural network model and a second neural network model; in input data for training the first neural network model, a pilot signal in a first time domain transmission unit of the K consecutive time domain transmission units for sending the pilot signals is sent on an RB with a number being even; and in input data for training the second neural network model, a pilot signal in a first time domain transmission unit of the K consecutive time domain transmission units for sending the pilot signals is sent on an RB with a number being odd.

The pilot signal in the first time domain transmission unit may be sent on the RB with the number being even, and may also be sent on the RB with the number being odd. Therefore, to improve precision of signal estimation and channel prediction, it is necessary to train neural network models for such two cases respectively, and after the neural network models are trained, the two neural network models may be alternately used for channel estimation and prediction.

In some embodiments, the performing channel estimation based on the neural network model includes: performing channel estimation by using the first neural network model if the received pilot signal in the first time domain transmission unit is sent on the RB with the number being even; and performing channel estimation by using the second neural network model if the received pilot signal in the first time domain transmission unit is sent on the RB with the number being odd.

In this embodiment, the pilot signal includes at least one of the following: a channel state information reference signal CSI-RS, a sounding reference signal (Sounding Reference Signal, SRS), and a demodulation reference signal (Demodulation Reference Signal, DMRS). The time domain transmission unit includes any one of the following: a transmission time interval TTI, a subframe, a millisecond, a slot, and a symbol.

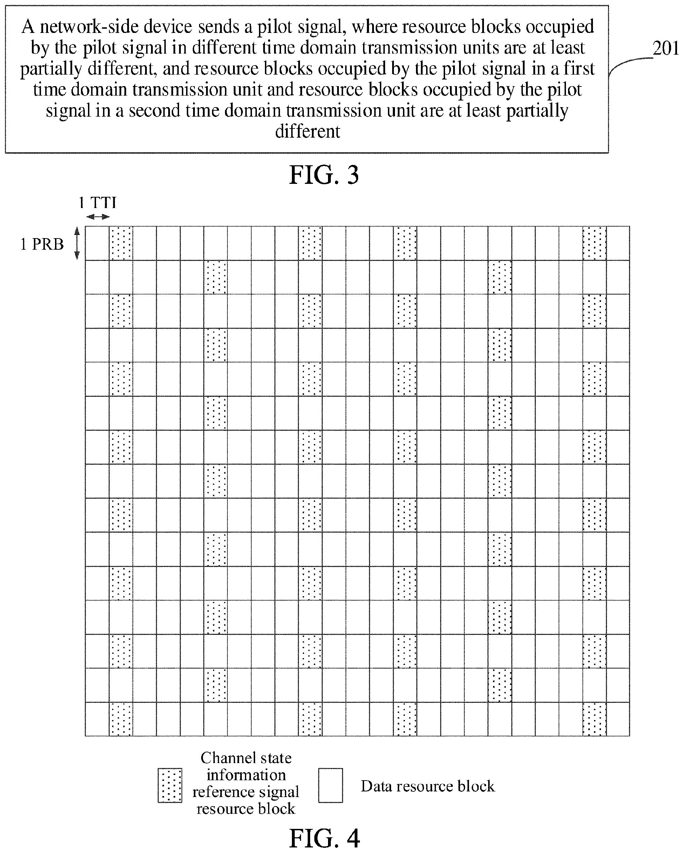

An embodiment of this application further provides a channel estimation method, performed by a network-side device. As shown in FIG. 3, the method includes the following steps:

Step 201: The network-side device sends a pilot signal, where resource blocks RBs occupied by the pilot signal in a first time domain transmission unit and RBs occupied by the pilot signal in a second time domain transmission unit are at least partially different.

In this embodiment of this application, to reduce pilot overheads, a network-side device does not send a pilot signal on each RB of a time domain transmission unit, but sends the pilot signal on a part of RBs. In each time domain transmission unit, the pilot signal is sent by using a resource block RB as a basic unit. In addition, if a quantity of RBs for sending the pilot signal does not change, because the pilot signal is only sent on a part of RBs in a time domain transmission unit, time domain transmission units for sending the pilot signal can be increased, and an interval between the time domain transmission units for sending pilot signals can be reduced, so that precision of channel estimation can be improved, thereby improving performance of a communication system.

In addition, to further reduce the pilot overheads, the network-side device may also send the pilot signal once every a plurality of time domain transmission units. That the network-side device sends a pilot signal includes:

sending the pilot signal on a first RB of the first time domain transmission unit; and

sending the pilot signal on a second RB of the second time domain transmission unit, where

the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

In some embodiments, a number of the first RB is even, and a number of the second RB is odd; or the number of the first RB is odd, and the number of the second RB is even.

In other words, if an RB with a number being odd is selected for sending a pilot signal in a time domain transmission unit for sending the pilot signal, an RB with a number being even is selected for sending the pilot signal in a next time domain transmission unit for sending the pilot signal. By analogy, in each different time domain transmission unit for sending the pilot signal, the network-side device alternately selects an RB with a number being odd and an RB with a number being odd, to send the pilot signal.

In this embodiment, the pilot signal includes at least one of the following: a channel state information reference signal CSI-RS, a sounding reference signal SRS, and a demodulation reference signal DMRS. The time domain transmission unit includes any one of the following: a transmission time interval TTI, a subframe, a millisecond, a slot, and a symbol.

By using the pilot signal as the CSI-RS and the time domain transmission unit as the TTI as examples, in this embodiment, a transmit end has N antennas based on an OFDM-based large-scale MIMO system. To enable a terminal user to obtain channel information of downlink large-scale MIMO, the network-side device sends pilots CSI-RS of N ports. To reduce pilot overheads, a pilot signal CSI-RS is not sent in each TTI, but is sent every S TTIs. In each TTI, the pilot CSI-RS is sent by using an RB as a basic unit. Each RB includes 12 subcarriers in frequency domain, and includes a plurality of OFDM symbols (equal to OFDM symbols included in each TTI) in time domain. It is assumed that each TTI has M RBs, each RB has a number, and both pilot design and resource allocation are performed by using an RB as a basic unit. In this embodiment, as shown in FIG. 4, the pilot CSI-RS is not sent on each RB, but is only sent on a half of RBs. If an RB with a number being odd is selected for sending a CSI-RS in a TTI for sending the CSI-RS, an RB with a number being even is selected for sending the CSI-RS on a next TTI for sending the CSI-RS. By analogy, in each different TTI for sending the CSI-RS, the network-side device alternately selects an RB with a number being odd and an RB with a number being even, to send the CSI-RS.

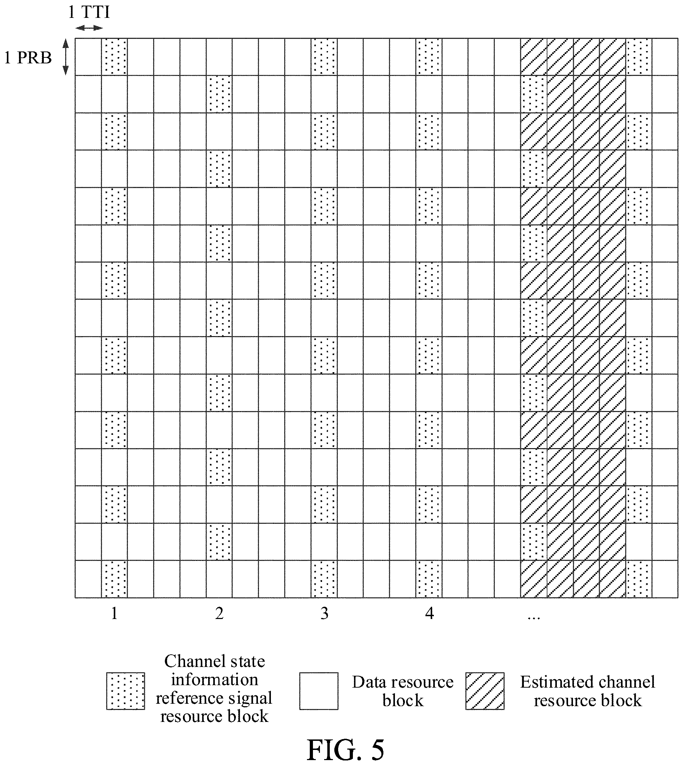

After receiving a signal in a TTI of a CSI-RS sent by the network-side device, a receive end (namely, a terminal) may use the CSI-RS to estimate channels of N antennas on a corresponding RB, but cannot precisely know a channel on an RB not for sending the CSI-RS in the TTI. In addition, in S TTIs between the TTI and the next TTI for sending the CSI-RS, channels of the N antennas on all RBs cannot be precisely known. In this embodiment, by using a channel on each RB estimated through previous K TTIs for sending the CSI-RS and a neural network model based on an attention mechanism, channels of N antennas on RBs not for sending the CSI-RS in a current TTI (denoted as a $K^{th}$ TTI) can be estimated, and channels on all RBs in L TTIs not for sending the CSI-RS can also be predicted, as shown in FIG. 5.

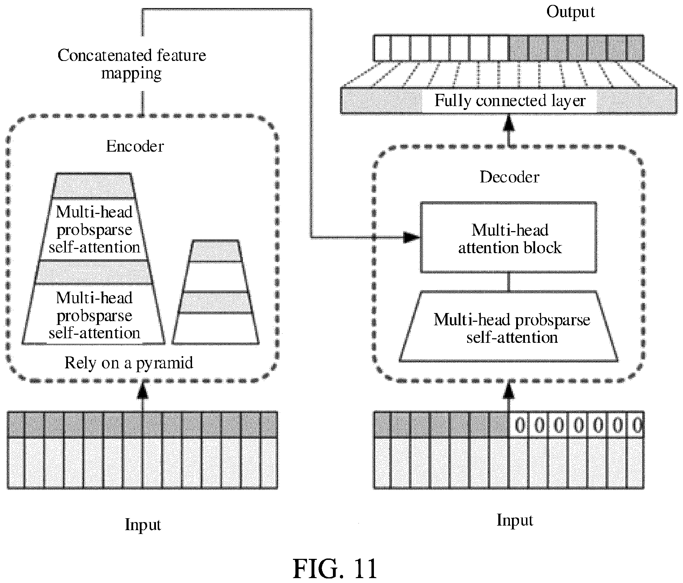

In this embodiment, the neural network model uses an attention mechanism-based informer network structure, and the neural network model uses an encoder-decoder architecture, as shown in FIG. 11.

An encoder is formed by multi-head probsparse self-attention (multi-head ProbSparse Self-attention) and self-attention distilling (Self-Attention Distilling).

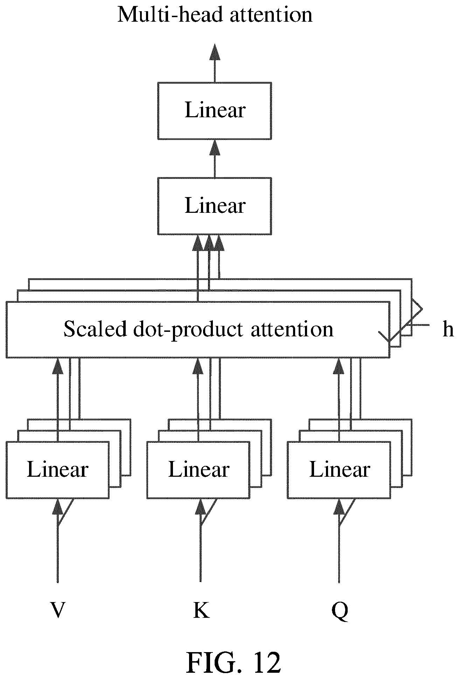

For the multi-head probsparse self-attention, as shown in FIG. 12, inputs thereof are three vectors, namely, Q, V, and K, and a calculation process thereof is as follows:

1. For Q, V, and K, N groups of Q, K, and V are obtained separately through N times of linear transformation, where n corresponds to n-head.
2. For each group of Q, K, and V, a corresponding output head head is obtained through attention (scaled dot-product attention (scaled Dot-product Attention)). A calculation method is as follows:

$$\text{Attention}(Q, K, V) = \text{softmax}(\frac{QK^T}{\sqrt{d_k}})V$$

3. All heads are spliced, and the heads are linearly mapped into a final output.

For the self-attention distilling, because an output at each position in a sequence includes information of another element in the sequence (a responsibility of the self-attention), it is found that the self-attention distilling can shorten a length of an input sequence as a quantity of layers of the encoder is deepened. Therefore, each encoder has a structure similar to a pyramid.

As a natural result of the probsparse self-attention, feature mapping of the encoder may bring a redundant combination, an advantage feature with a dominant feature is privileged by using the distilling, and feature mapping of focus self-attention (focus self-attention) is generated on a next layer. Inspired by extended convolution, a "distilling" process herein advancing from a $j^{th}$ layer to a $(j+1)^{th}$ layer is as follows:

$$\mathbf{X}_{j+1}^t = \text{MaxPool}\left(\text{ELU}\left(\text{Conv1d}\left(\left[\mathbf{X}_j^t\right]_{AB}\right)\right)\right)$$

$[.]_{AB}$ includes the multi-head probsparse self-attention and a basic operation of an attention block, Conv1d($\cdot$) uses the activation function ELU(.) to execute a one-dimensional convolution filter (a kernel width equal to three) in a time dimension, and a maximum pooling layer with a stride of 2 and down-sampling (down-sample) is added herein.

A decoder is formed by single-layer multi-head probsparse self-attention and masked multi-head attention (Masked multi-head attention).

As shown in FIG. 12, inputs of the multi-head attention are three vectors, namely, Q, V, and K, and a calculation process thereof is as follows:

1. For Q, V, and K, N groups of Q, K, and V are obtained separately through N times of linear transformation, where n corresponds to n-head.
2. For each group of Q, K, and V, a corresponding output head is obtained through attetion (scaled dot-product attention). A calculation method is as follows:

$$\text{Attention}(Q, K, V) = \text{softmax}(\frac{QK^T}{\sqrt{d_k}})V$$

3. All heads are spliced, and the heads are linearly mapped into a final output.

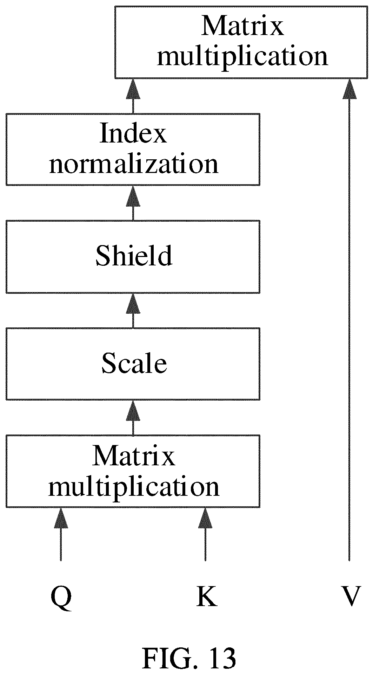

The masked multi-head attention is applied to a probsparse self-attention calculation, which can prevent every position from focusing on a future position, thereby avoiding autoregression. A principle is shown in FIG. 13, and a result of a dot product is set to negative infinity.

An input of the neural network model in this embodiment is K sequences $\mathbf{X^t}$, a length of each sequence is M×N, values of elements are channels of N antennas on M RBs estimated through a CSI-RS, and a channel value on an RB not for sending the CSI-RS is replaced with 0. Therefore, $\mathbf{X^t}$ is a matrix of MN×K.

In K TTIs used for prediction, if the CSI-RS in a first TTI is sent on an RB with a number being odd, $\mathbf{X^t}$ may be indicated as:

$$\mathbf{X^t} = [\mathbf{x_1}, \mathbf{x_2}, \cdots, \mathbf{x_k}] = \begin{bmatrix} h_{1,1}^{(1)} & 0 & h_{1,1}^{(3)} & 0 & \cdots & 0 \\ h_{1,2}^{(1)} & 0 & h_{1,2}^{(3)} & 0 & \cdots & 0 \\ \vdots & \vdots & \vdots & \vdots & \cdots & \vdots \\ h_{1,N}^{(1)} & 0 & h_{1,N}^{(3)} & 0 & \cdots & 0 \\ 0 & h_{2,1}^{(2)} & 0 & h_{2,1}^{(4)} & \cdots & h_{2,1}^{(K)} \\ 0 & h_{2,2}^{(2)} & 0 & h_{2,2}^{(4)} & \cdots & h_{2,2}^{(K)} \\ \vdots & \vdots & \vdots & \vdots & \cdots & \vdots \\ 0 & h_{2,N}^{(2)} & 0 & h_{2,N}^{(4)} & \cdots & h_{2,N}^{(K)} \\ h_{3,1}^{(1)} & 0 & h_{3,1}^{(3)} & 0 & \cdots & 0 \\ h_{3,2}^{(1)} & 0 & h_{3,2}^{(3)} & 0 & \cdots & 0 \\ \vdots & \vdots & \vdots & \vdots & \cdots & \vdots \\ h_{3,N}^{(1)} & 0 & h_{3,N}^{(3)} & 0 & \cdots & 0 \\ 0 & h_{4,1}^{(2)} & 0 & h_{4,1}^{(4)} & \cdots & h_{4,1}^{(K)} \\ 0 & h_{4,2}^{(2)} & 0 & h_{4,2}^{(4)} & \cdots & h_{4,2}^{(K)} \\ \vdots & \vdots & \vdots & \vdots & \cdots & \vdots \\ 0 & h_{4,N}^{(2)} & 0 & h_{4,N}^{(4)} & \cdots & h_{4,N}^{(K)} \\ \vdots & \vdots & \vdots & \vdots & \cdots & \vdots \\ h_{M,1}^{(1)} & 0 & h_{M,1}^{(3)} & 0 & \cdots & 0 \\ h_{M,2}^{(1)} & 0 & h_{M,2}^{(3)} & 0 & \cdots & 0 \\ \vdots & \vdots & \vdots & \vdots & \cdots & \vdots \\ h_{M,N}^{(1)} & 0 & h_{M,N}^{(3)} & 0 & \cdots & 0 \end{bmatrix}$$

$h_{i,j}^{(k)}$ indicates a channel of a $j^{th}$ antenna on an $i^{th}$ RB in a $k^{th}$ TTI. $\mathbf{x_i^t}$ is an $i^{th}$ column of X', namely, a channel estimation result in an $i^{th}$ TTI.

In the K TTIs used for prediction, if the CSI-RS in the first TTI is sent on an RB with a number being even, $\mathbf{X^t}$ may be indicated as:

$$\mathbf{X}^t = [\mathbf{x}^t_1, \mathbf{x}^t_2, \cdots, \mathbf{x}^t_k] = \begin{bmatrix} 0 & h^{(2)}_{1,1} & 0 & h^{(4)}_{1,1} & \cdots & h^{(K)}_{1,1} \\ 0 & h^{(2)}_{1,2} & 0 & h^{(4)}_{1,2} & \cdots & h^{(K)}_{1,2} \\ \vdots & \vdots & \vdots & \vdots & \cdots & \vdots \\ 0 & h^{(2)}_{1,N} & 0 & h^{(4)}_{1,N} & \cdots & h^{(K)}_{1,N} \\ h^{(1)}_{2,1} & 0 & h^{(3)}_{2,1} & 0 & \cdots & 0 \\ h^{(1)}_{2,2} & 0 & h^{(3)}_{2,2} & 0 & \cdots & 0 \\ \vdots & \vdots & \vdots & \vdots & \cdots & \vdots \\ h^{(1)}_{2,N} & 0 & h^{(3)}_{2,N} & 0 & \cdots & 0 \\ 0 & h^{(2)}_{3,1} & 0 & h^{(4)}_{3,1} & \cdots & h^{(K)}_{3,1} \\ 0 & h^{(2)}_{3,2} & 0 & h^{(4)}_{3,2} & \cdots & h^{(K)}_{3,2} \\ \vdots & \vdots & \vdots & \vdots & \cdots & \vdots \\ 0 & h^{(2)}_{3,N} & 0 & h^{(4)}_{3,N} & \cdots & h^{(K)}_{3,N} \\ h^{(1)}_{4,1} & 0 & h^{(3)}_{4,1} & 0 & \cdots & 0 \\ h^{(1)}_{4,2} & 0 & h^{(3)}_{4,2} & 0 & \cdots & 0 \\ \vdots & \vdots & \vdots & \vdots & \cdots & \vdots \\ h^{(2)}_{4,N} & 0 & h^{(4)}_{4,N} & 0 & \cdots & 0 \\ \vdots & \vdots & \vdots & \vdots & \cdots & \vdots \\ 0 & h^{(2)}_{M,1} & 0 & h^{(3)}_{M,1} & \cdots & h^{(K)}_{M,1} \\ 0 & h^{(2)}_{M,2} & 0 & h^{(3)}_{M,2} & \cdots & h^{(K)}_{M,1} \\ \vdots & \vdots & \vdots & \vdots & \cdots & \vdots \\ 0 & h^{(2)}_{M,N} & 0 & h^{(3)}_{M,N} & \cdots & h^{(K)}_{M,1} \end{bmatrix}$$

An output of the neural network model is L+1 sequences $\mathbf{Y}^t$, which are estimated values and predicted values of channels of N antennas on all M RBs in the $K^{th}$ TTI and L consecutive TTIs after the $K^{th}$ TTI.

$$\mathbf{Y}^t = [\mathbf{y}^t_1, \mathbf{y}^t_2, \cdots, \mathbf{y}^t_L] = \begin{bmatrix} \hat{h}^{(K)}_{1,1} & \hat{h}^{(K+1)}_{1,1} & \cdots & \hat{h}^{(K+L)}_{1,1} \\ \hat{h}^{(K)}_{1,2} & \hat{h}^{(K+1)}_{1,2} & \cdots & \hat{h}^{(K+L)}_{1,2} \\ \vdots & \vdots & \cdots & \vdots \\ \hat{h}^{(K)}_{1,N} & \hat{h}^{(K+1)}_{1,N} & \cdots & \hat{h}^{(K+L)}_{1,N} \\ \hat{h}^{(K)}_{2,1} & \hat{h}^{(K+1)}_{2,1} & \cdots & \hat{h}^{(K+L)}_{2,1} \\ \hat{h}^{(K)}_{2,1} & \hat{h}^{(K+1)}_{2,2} & \cdots & \hat{h}^{(K+L)}_{2,2} \\ \vdots & \vdots & \cdots & \vdots \\ \hat{h}^{(K)}_{2,N} & \hat{h}^{(K+1)}_{2,N} & \cdots & \hat{h}^{(K+1)}_{2,N} \\ \vdots & \vdots & \cdots & \vdots \\ \hat{h}^{(K)}_{M,1} & \hat{h}^{(K+1)}_{M,1} & \cdots & \hat{h}^{(K+L)}_{M,1} \\ \hat{h}^{(K)}_{M,2} & \hat{h}^{(K+1)}_{M,2} & \cdots & \hat{h}^{(K+L)}_{M,2} \\ \vdots & \vdots & \cdots & \vdots \\ \hat{h}^{(K)}_{M,N} & \hat{h}^{(K+1)}_{M,N} & \cdots & \hat{h}^{(K+L)}_{M,N} \end{bmatrix}$$

$\hat{h}^{(k)}_{i,j}$ indicates a predicted value of the channel of the $j^{th}$ antenna on the $i^{th}$ RB in the $k^{th}$ TTI.

In this embodiment, when channel estimation and prediction are performed by using the neural network model, first, channel vector sequences $\mathbf{X}^t$ estimated through the CSI-RS in the K TTIs are input into an encoder. The encoder includes a multi-layer attention mechanism composite network, and each layer is formed by multi-header probsparse self-attention and self-attention distilling. Through the multi-layer attention mechanism composite network, an output $\mathbf{B}^t$ of the encoder is generated. Then $\mathbf{B}^t$ is input into a decoder. The decoder has only one layer, and is formed by masked probsparse multi-head attention and multi-head attention, where an input of the masked probsparse multi-head attention is a vector sequence $\mathbf{X}^t$ with a length of K/2+L+1, first K/2 sequences thereof are second half of $\mathbf{X}^t$, and last L+1 vector

$$\mathbf{X}^t_d = \left\{ \mathbf{x}^t_{K/2+1} \quad \mathbf{x}^t_{K/2+2} \quad \cdots \quad \mathbf{x}^t_K \quad 0 \quad 0 \quad \cdots \quad 0 \right\}$$

sequences are all a vector 0. That is, . After an output of the masked probsparse multi-head attention and the output of the encoder are both transmitted to the multi-head attention, an output of the multi-head attention is generated. After the output of the multi-head attention passes through a fully connected network, a prediction result $\mathbf{Y}^t$ is output.

To perform channel estimation and prediction by using the attention mechanism-based informer network structure, a network parameter of an informer network needs to be trained. During training, $\mathbf{X}^t$ in training data comes from CSI-RS channel estimation from each TTI, and a matched target is an actual channel $\mathbf{H}^t$ from K to K+L TTIs. A plurality of groups of training data are used to train the informer network, and each group of training data includes input data (a CSI-RS channel estimation result in each TTI) of the informer network and corresponding actual channel data $\mathbf{H}^t$. Channel estimation results of K consecutive TTIs are used for training, and a target of training and optimization is to minimize a mean square error between the output of the neural network model $\mathbf{Y}^t$ and the actual channel $\mathbf{H}^t$. That is,

$$\min\left(\left\|\mathbf{H}^t - \mathbf{Y}^t\right\|\right)^2 = \min \sum_{i=1}^{i=M}\left\|\mathbf{h}^t_i - \mathbf{y}^t_i\right\|^2 .$$

Alternatively, the target of training and optimization may be that a quantity of iterations reaches a preset quantity of iterations, such as 100 times.

$$\mathbf{H}^{t} = [\mathbf{h}^{t}_{1}, \mathbf{h}^{t}_{2}, \cdots, \mathbf{h}^{t}_{L}] = \begin{bmatrix} h_{1,1}^{(K)} & h_{1,1}^{(K+1)} & \cdots & h_{1,1}^{(K+L)} \\ h_{1,2}^{(K)} & h_{1,2}^{(K+1)} & \cdots & h_{1,2}^{(K+L)} \\ \vdots & \vdots & \cdots & \vdots \\ h_{1,N}^{(K)} & h_{1,N}^{(K+1)} & \cdots & h_{1,N}^{(K+L)} \\ h_{2,1}^{(K)} & h_{2,1}^{(K+1)} & \cdots & h_{2,1}^{(K+L)} \\ h_{2,1}^{(K)} & h_{2,2}^{(K+1)} & \cdots & h_{2,2}^{(K+L)} \\ \vdots & \vdots & \cdots & \vdots \\ h_{2,N}^{(K)} & h_{2,N}^{(K+1)} & \cdots & h_{2,N}^{(K+1)} \\ \vdots & \vdots & \cdots & \vdots \\ h_{M,1}^{(K)} & h_{M,1}^{(K+1)} & \cdots & h_{M,1}^{(K+L)} \\ h_{M,2}^{(K)} & h_{M,2}^{(K+1)} & \cdots & h_{M,2}^{(K+L)} \\ \vdots & \vdots & \cdots & \vdots \\ h_{M,N}^{(K)} & h_{M,N}^{(K+1)} & \cdots & h_{M,N}^{(K+L)} \end{bmatrix}$$

The pilot signal in the first time domain transmission unit may be sent on the RB with the number being even, and may also be sent on the RB with the number being odd. Therefore, to improve precision of signal estimation and channel prediction, it is necessary to train neural network models for such two cases respectively, and after the neural network models are trained, the two neural network models may be alternately used for channel estimation and prediction.

This embodiment may be applied to an application scenario in which technologies such as LTE, GSM, and CDMA use large-scale MIMO. By using the attention mechanism-based channel estimation and prediction method in this embodiment, channels without a pilot signal in the future can be predicted by using known channel information, so that pilot overheads are greatly reduced, and performance of the system is also improved.

It should be noted that, an execution body of the channel estimation method provided in the embodiments of this application may be a channel estimation apparatus, or a module configured to execute and load the channel estimation method in the channel estimation apparatus. In the embodiments of this application, an example in which the channel estimation apparatus executes and load the channel estimation method is used to describe the channel estimation method provided in the embodiments of this application.

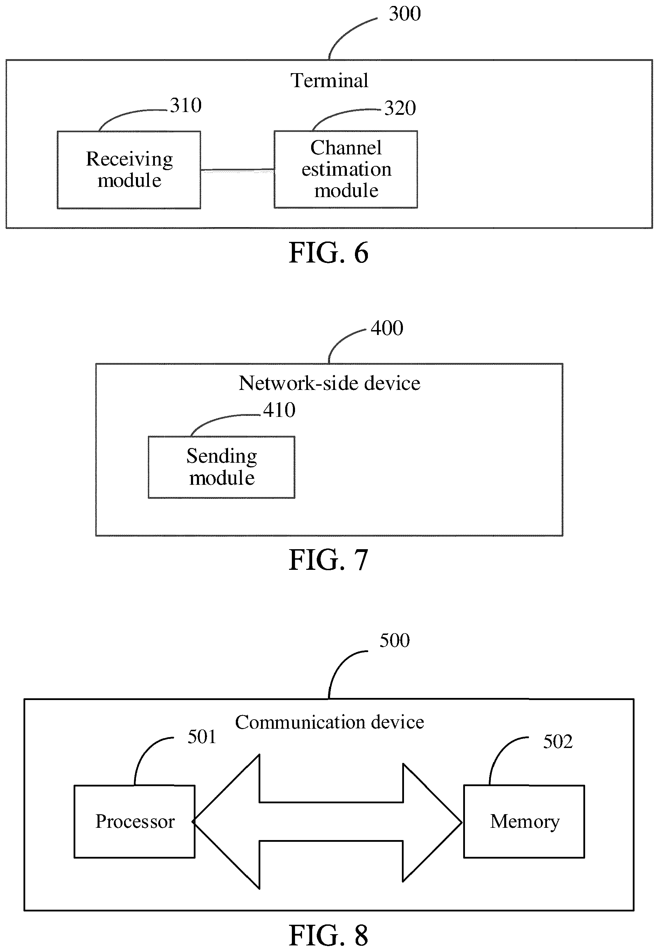

An embodiment of this application provides a channel estimation apparatus, used in a terminal 300. As shown in FIG. 6, the apparatus includes:

a receiving module 310, configured to receive a pilot signal sent by a network-side device, where resource blocks RBs occupied by the pilot signal in a first time domain transmission unit and RBs occupied by the pilot signal in a second time domain transmission unit are at least partially different; and

a channel estimation module 320, configured to perform channel estimation on a third time domain transmission unit based on the pilot signal in the first time domain transmission unit and the pilot signal in the second time domain transmission unit.

In this embodiment of this application, a terminal receives a pilot signal sent by a network-side device, where resource blocks RBs occupied by the pilot signal in a first time domain transmission unit and resource blocks RBs occupied by the pilot signal in a second time domain transmission unit are at least partially different. In other words, the network-side device sends the pilot signal only on a part of RBs, so that pilot overheads can be reduced, thereby improving performance of a communication system.

In some embodiments, the channel estimation module is specifically configured to perform channel estimation based on the pilot signal in the first time domain transmission unit, the pilot signal in the second time domain transmission unit, and a pre-trained neural network model, to obtain channels on all RBs in the third time domain transmission unit.

In some embodiments, the channel estimation module is specifically configured to perform channel estimation based on the pilot signal in the first time domain transmission unit, the pilot signal in the second time domain transmission unit, and a pre-trained neural network model, to obtain channels on all RBs in L time domain transmission units after a current time domain transmission unit, where L is a positive integer.

In some embodiments, all the RBs are RBs determined according to a predefined rule or a pre-configuration manner.

In some embodiments, the RBs determined according to the predefined rule or the pre-configuration manner include at least the RBs occupied by the pilot signal in a first time domain transmission unit and the RBs occupied by the pilot signal in a second time domain transmission unit.

In some embodiments, the channel estimation module is specifically configured to perform channel estimation by using pilot signals in nearest K time domain transmission units for sending pilot signals, and K is a positive integer.

In some embodiments, the receiving module is specifically configured to receive the pilot signal sent by the network-side device on a first RB of the first time domain transmission unit; and receive the pilot signal sent by the network-side device on a second RB of the second time domain transmission unit, where

the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

In some embodiments, a number of the first RB is even, and a number of the second RB is odd; or the number of the first RB is odd, and the number of the second RB is even.

In some embodiments, the apparatus further includes a training module, configured to train to obtain the neural network model, where

the step of training to obtain the neural network model includes at least one of the following:
an establishing step: establishing a neural network initial model;
a training step: training the neural network initial model by using training data, to obtain a trained neural network initial model, where the training data includes input data of the neural network initial model and corresponding actual channel data, the input data is channel estimation results of K consecutive time domain transmission units for sending pilot signals, a length of the channel estimation result of each time domain transmission unit is $M \times N$, an output of the neural network initial model is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and
a determining step: if a mean square error between the output of the trained neural network initial model and the corresponding actual channel data is greater than or equal to a preset threshold or does not reach a preset quantity of iterations, returning to the training step; and if the mean square error between the output of the trained neural network initial model and the corresponding actual channel data is less than the preset threshold or reaches the preset quantity of iterations, using the trained neural network initial model as the neural network model.

In some embodiments, the training module is specifically configured to perform at least one of the following:

a training step: training the neural network model obtained by last training by using training data, to obtain a trained neural network model, where the training data includes input data of the neural network model obtained by the last training and corresponding actual channel data, the input data is channel estimation results of K consecutive time domain transmission units for sending pilot signals, a length of a channel estimation result of each time domain transmission unit is $M \times N$, an output of the neural network model obtained by the last training is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and
a determining step: if a mean square error between the output of the trained neural network model and the corresponding actual channel data is greater than or equal to the preset threshold or does not reach the preset quantity of iterations, returning to the training step; and if the mean square error between the output of the trained neural network model and the corresponding actual channel data is less than the preset threshold or reaches the preset quantity of iterations, using the trained neural network model as the neural network model.

In some embodiments, the neural network model includes a first neural network model and a second neural network model; in input data for training the first neural network model, a pilot signal in a first time domain transmission unit of the K consecutive time domain transmission units for sending the pilot signals is sent on an RB with a number being even; and in input data for training the second neural network model, a pilot signal in a first time domain transmission unit of the K consecutive time domain transmission units for sending the pilot signals is sent on an RB with a number being odd.

In some embodiments, the channel estimation module is specifically configured to perform channel estimation by using the first neural network model if the received pilot signal in the first time domain transmission unit is sent on the RB with the number being even; and perform channel estimation by using the second neural network model if the received pilot signal in the first time domain transmission unit is sent on the RB with the number being odd.

In some embodiments, the pilot signal includes at least one of the following:
a channel state information reference signal CSI-RS, a sounding reference signal SRS, and a demodulation reference signal DMRS.

In some embodiments, the time domain transmission unit includes any one of the following: a transmission time interval TTI, a subframe, a millisecond, a slot, and a symbol.

The channel estimation apparatus in this embodiment of this application may be an apparatus, an apparatus having an operating system, or an electronic device, or may be a component, an integrated circuit, or a chip in a terminal. The apparatus or the electronic device may be a mobile terminal or a non-mobile terminal. For example, the mobile terminal may include but is not limited to a type of the terminal 11 listed above, and the non-mobile terminal may be a server, a network attached storage (Network Attached Storage, NAS), a personal computer (personal computer, PC), a television (television, TV), a teller machine, a self-service machine, or the like. This is not limited in this application.

The channel estimation apparatus provided in this embodiment of this application can implement each process implemented in the method embodiment of FIG. 2, and achieve a same technical effect. To avoid repetition, details are not described herein again.

An embodiment of this application provides a channel estimation apparatus, used in a network-side device 400. As shown in FIG. 7, the apparatus includes:
a sending module 410, configured to send a pilot signal, where resource blocks RBs occupied by the pilot signal in a first time domain transmission unit and RBs occupied by the pilot signal in a second time domain transmission unit are at least partially different.

In this embodiment of this application, to reduce pilot overheads, a network-side device does not send a pilot signal on each RB of a time domain transmission unit, but sends the pilot signal on a part of RBs. In each time domain transmission unit, the pilot signal is sent by using a resource block RB as a basic unit.

In addition, to further reduce the pilot overheads, the network-side device may also send the pilot signal once every a plurality of time domain transmission units. In some embodiments, the sending module is specifically configured to send the pilot signal on a first RB of the first time domain transmission unit; and send the pilot signal on a second RB of the second time domain transmission unit, where
the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

In some embodiments, a number of the first RB is even, and a number of the second RB is odd; or
the number of the first RB is odd, and the number of the second RB is even.

In some embodiments, the pilot signal includes at least one of the following:
a channel state information reference signal CSI-RS, a sounding reference signal SRS, and a demodulation reference signal DMRS. The time domain transmission unit includes any one of the following: a transmission time interval TTI, a subframe, a millisecond, a slot, and a symbol.

The channel estimation apparatus provided in this embodiment of this application can implement each process implemented in the method embodiment of FIG. 3, and achieve a same technical effect. To avoid repetition, details are not described herein again.

Optionally, as shown in FIG. 8, an embodiment of this application further provides a communication device 500, including a processor 501, a memory 502, a program or instructions stored in the memory 502 and runnable on the processor 501. For example, if the communication device 500 is a terminal, when executed by the processor 501, the program or the instructions implement each process of the foregoing embodiment of the channel estimation method applied to the terminal, and can achieve a same technical effect. If the communication device 500 is a network-side device, when executed by the processor 501, the program or the instructions implement each process of the foregoing embodiment of the channel estimation method applied to the network-side device, and can achieve a same technical effect. To avoid repetition, details are not described herein again.

An embodiment of this application further provides a terminal, including a processor and a communication interface. The communication interface is configured to receive a pilot signal sent by a network-side device, where resource blocks RBs occupied by the pilot signal in a first time domain transmission unit and RBs occupied by the pilot signal in a second time domain transmission unit are at least partially different; and the processor is configured to perform channel estimation on a third time domain transmission unit based on the pilot signal in the first time domain transmission unit and the pilot signal in the second time domain transmission unit.

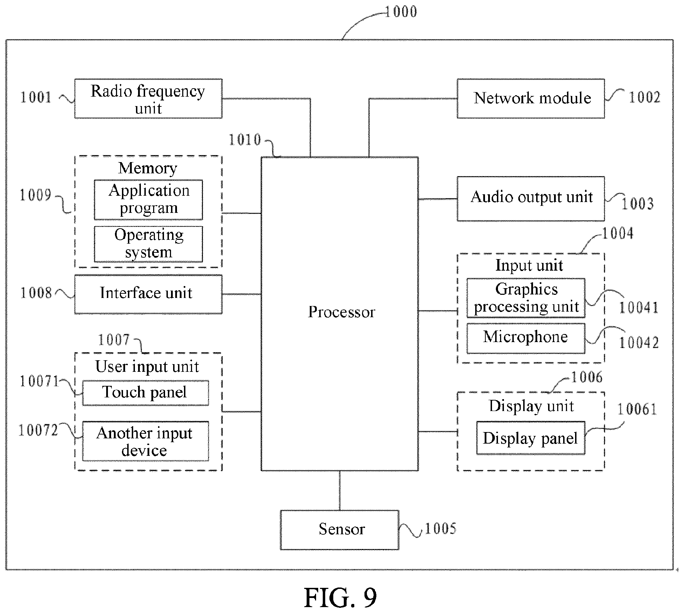

Specifically, FIG. 9 is a schematic structural diagram of hardware of a terminal according to an embodiment of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

It may be understood by a person skilled in the art that, the terminal 1000 may further include a power supply (such as a battery) for supplying power to each component, and the power supply may be logically connected to the processor 1010 through a power supply management system, thereby achieving a function such as charging and discharging management, and power consumption management through the power management system. The terminal structure shown in FIG. 9 does not constitute a limitation on the terminal, and the terminal may include more or fewer components than those shown in the figure, or combine some components, or arrange different components. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a static picture or a video obtained by an image acquisition device (for example, a camera) in a video acquisition mode or an image acquisition mode. The display unit 1006 may include a display panel 10061, and the display panel 10061 may be configured in a form of a liquid crystal display, an organic light-emitting diode, or the like. The user input unit 1007 includes a touch panel 10071 and another input device 10072. The touch panel 10071 may also be referred to as a touch screen. The touch panel 10071 may include two parts: a touch detection apparatus and a touch controller. The another input device 10072 may include but is not limited to a physical keyboard, a functional key (such as a volume control key or a switch key), a track ball, a mouse, and a joystick. This is not described herein again.

In this embodiment of this application, after receiving downlink data from a network-side device, the radio frequency unit 1001 sends the downlink data to the processor 1010 for processing, and sends uplink channel estimation to the network-side device. Generally, the radio frequency unit 1001 includes but is not limited to an antenna, at least one amplifier, a transceiver, a coupler, a low noise amplifier, a duplexer, and the like.

The memory 1009 is configured to store a software program or instructions and various data. The memory 1009 may mainly include a program or instruction storage area and a data storage area. The program or instruction storage area may store an operating system, an application program or instructions required by at least one function (for example, a sound playback function and an image display function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the memory includes at least one disk storage device, a flash memory, or another non-volatile solid state storage device.

The processor 1010 may include one or more processing units. Optionally, the processor 1010 may integrate an application processor and a modem processor, where the application processor mainly processes an operating system, a user interface, and an application program or instructions, and the like, and the modem processor mainly processes wireless communication, such as a baseband processor. It may be understood that, the foregoing modem processor may not be integrated into the processor 1010.

The processor 1010 is configured to receive a pilot signal sent by the network-side device, where resource blocks RBs occupied by the pilot signal in a first time domain transmission unit and RBs occupied by the pilot signal in a second time domain transmission unit are at least partially different; and perform channel estimation on a third time domain transmission unit based on the pilot signal in the first time domain transmission unit and the pilot signal in the second time domain transmission unit.

In some embodiments, the processor 1010 is configured to perform channel estimation based on the pilot signal in the first time domain transmission unit, the pilot signal in the second time domain transmission unit, and a pre-trained neural network model, to obtain channels on all RBs in the third time domain transmission unit.

In some embodiments, the processor 1010 is configured to perform channel estimation based on the pilot signal in the first time domain transmission unit, the pilot signal in the second time domain transmission unit, and a pre-trained neural network model, to obtain channels on all RBs in L time domain transmission units after a current time domain transmission unit, where L is a positive integer.

In some embodiments, all the RBs are RBs determined according to a predefined rule or a pre-configuration manner.

In some embodiments, the RBs determined according to the predefined rule or the pre-configuration manner include at least the RBs occupied by the pilot signal in a first time domain transmission unit and the RBs occupied by the pilot signal in a second time domain transmission unit.

In some embodiments, the processor 1010 is specifically configured to perform channel estimation by using pilot signals in nearest K time domain transmission units for sending pilot signals, and K is a positive integer.

In some embodiments, the processor 1010 is configured to receive the pilot signal sent by the network-side device on a first RB of the first time domain transmission unit; and receive the pilot signal sent by the network-side device on a second RB of the second time domain transmission unit, where

the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

In some embodiments, a number of the first RB is even, and a number of the second RB is odd; or the number of the first RB is odd, and the number of the second RB is even.

In some embodiments, the processor 1010 is configured to train to obtain the neural network model, where the step of training to obtain the neural network model includes at least one of the following:

an establishing step: establishing a neural network initial model;

a training step: training the neural network initial model by using training data, to obtain a trained neural network initial model, where the training data includes input data of the neural network initial model and corresponding actual channel data, the input data is channel estimation results of K consecutive time domain transmission units for sending pilot signals, a length of the channel estimation result of each time domain transmission unit is M×N, an output of the neural network initial model is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network initial model and the corresponding actual channel data is greater than or equal to a preset threshold or does not reach a preset quantity of iterations, returning to the training step; and if the mean square error between the output of the trained neural network initial model and the corresponding actual channel data is less than the preset threshold or reaches the preset quantity of iterations, using the trained neural network initial model as the neural network model.

In some embodiments, the step of training the neural network model includes one of the following:

a training step: training the neural network model obtained by last training by using training data, to obtain a trained neural network model, where the training data includes input data of the neural network model obtained by the last training and corresponding actual channel data, the input data is channel estimation results of K consecutive time domain transmission units for sending pilot signals, a length of a channel estimation result of each time domain transmission unit is M×N, an output of the neural network model obtained by the last training is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network model and the corresponding actual channel data is greater than or equal to the preset threshold or does not reach the preset quantity of iterations, returning to the training step; and if the mean square error between the output of the trained neural network model and the corresponding actual channel data is less than the preset threshold or reaches the preset quantity of iterations, using the trained neural network model as the neural network model.

In some embodiments, the neural network model includes a first neural network model and a second neural network model; in input data for training the first neural network model, a pilot signal in a first time domain transmission unit of the K consecutive time domain transmission units for sending the pilot signals is sent on an RB with a number being even; and in input data for training the second neural network model, a pilot signal in a first time domain transmission unit of the K consecutive time domain transmission units for sending the pilot signals is sent on an RB with a number being odd.

In some embodiments, the processor 1010 is configured to perform channel estimation by using the first neural network model if the received pilot signal in the first time domain transmission unit is sent on the RB with the number being even; and perform channel estimation by using the second neural network model if the received pilot signal in the first time domain transmission unit is sent on the RB with the number being odd.

In some embodiments, the pilot signal includes at least one of the following:
a channel state information reference signal CSI-RS, a sounding reference signal SRS, and a demodulation reference signal DMRS.

In some embodiments, the time domain transmission unit includes any one of the following: a transmission time interval TTI, a subframe, a millisecond, a slot, and a symbol.

An embodiment of this application further provides a network-side device, including a processor and a communication interface. The communication interface is configured to send a pilot signal, where resource blocks RBs occupied by the pilot signal in a first time domain transmission unit and RBs occupied by the pilot signal in a second time domain transmission unit are at least partially different.

This embodiment of the network-side device corresponds to the foregoing method embodiment of the network-side device, and each implementation process and implementation of the foregoing method embodiment may be applicable to this embodiment of the network-side device, and can achieve a same technical effect.

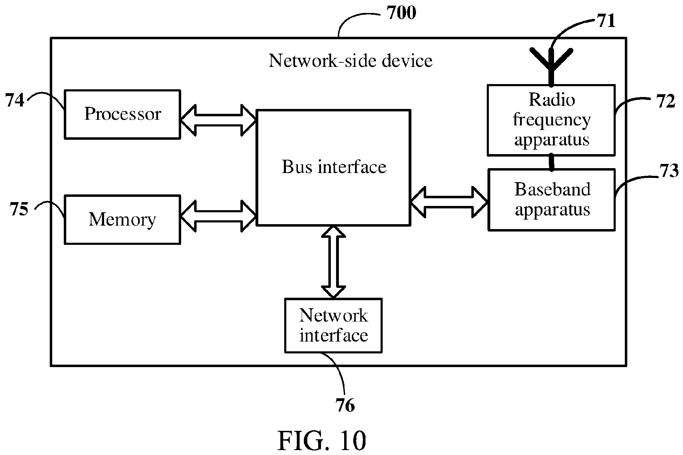

Specifically, an embodiment of this application further provides a network-side device. As shown in FIG. 10, a network-side device 700 includes an antenna 71, a radio frequency apparatus 72, and a baseband apparatus 73. The antenna 71 is connected to the radio frequency apparatus 72. In an uplink direction, the radio frequency apparatus 72 receives information through the antenna 71, and sends the received information to the baseband apparatus 73 for processing. In a downlink direction, the baseband apparatus 73 processes to-be-sent information and sends the information to the radio frequency apparatus 72. After processing the received information, the radio frequency apparatus 72 sends it out through the antenna 71.

The foregoing frequency band processing device may be located in the baseband apparatus 73, and the method executed by the network-side device in the foregoing embodiment may be implemented in the baseband apparatus 73. The baseband apparatus 73 includes a processor 74 and a memory 75.

For example, the baseband apparatus 73 may include at least one baseband board, and a plurality of chips are disposed on the baseband board. As shown in FIG. 10, one chip, for example, the processor 74, is connected to the memory 75, to invoke a program in the memory 75, to execute operations of the network device shown in the foregoing method embodiment.

The baseband apparatus 73 may further include a network interface 76, configured to exchange information with the radio frequency apparatus 72. The interface is, for example, a common public radio interface (common public radio interface, CPRI for short).

Specifically, the network-side device of this embodiment of the present invention further includes instructions or a program stored in the memory 75 and runnable on the processor 74. The processor 74 invokes the instructions or the program in the memory 75 to execute the method executed by each module shown in FIG. 7, and achieves a same technical effect. To avoid repetition, details are not described herein again.

An embodiment of this application further provides a readable storage medium, and the readable storage medium stores a program or instructions. When executed by a processor, the program or the instructions implement each process of the foregoing embodiments of the channel estimation methods, and can achieve a same technical effect. To avoid repetition, details are not described herein again.

The processor is a processor described in the terminal in the foregoing embodiment. The readable storage medium includes a computer readable storage medium, such as a computer read-only memory (Read-Only Memory, ROM), a random access memory (Random Access Memory, RAM), a magnetic disk, and an optical disc.

An embodiment of this application further provides a chip, where the chip includes a processor and a communication interface. The communication interface is coupled with the processor, the processor is configured to run a program or instructions, and each process of the foregoing embodiments of the channel estimation methods are implemented. In addition, a same technical effect can be achieved. To avoid repetition, details are not described herein again.

It should be understood that, the chip mentioned in embodiments of this application may also be referred to as a system level-chip, a system chip, a chip system or an on-chip system chip, and the like.

It should be noted that, the terms "include", "including", or any other variants thereof are intended to cover a non-exclusive inclusion, so that a process, a method, an object, or an apparatus that includes a series of elements not only includes those elements, but also includes an element that is not explicitly listed, or an elements inherent to the process, method, object, or apparatus. In an absence of more restrictions, an element limited by a sentence "includes one..." does not exclude having another identical element in the process, method, object, or apparatus that includes the element. Further, it should be noted that, the scope of the methods and apparatus in the embodiments of this application is not limited to performing a function in an order shown or discussed, and may also include performing the function in a substantially simultaneous manner or in an opposite order based on the involved function. For example, the described method may be performed in a different order than the described order, and various steps may also be added, omitted, or combined. In addition, a feature described with reference to an example may be combined in another example.

From description of the foregoing implementations, a person skilled in the art may clearly understand that the methods in the foregoing embodiments may be implemented by using software plus a necessary general hardware platform, and certainly may also be implemented by hardware. However, in many cases, the former is a better implementation. Based on such understanding, the technical solutions of this application may be embodied in a form of a computer software product in essence or in a part that contributes to the prior art. The computer software product is stored in a storage medium (such as a ROM/RAM, a magnetic disk, and an optical disc), and includes several instructions for enabling a terminal (which may be a mobile phone, a computer, a server, an air conditioner, or a network device, and the like) to execute the method described in each embodiment of this application.

The embodiments of this application are described with reference to the accompanying drawings. However, this application is not limited to the foregoing specific embodiments, and the foregoing specific embodiments are only illustrative rather than limiting. Given a motivation of this application, a person of ordinary skill in the art may also make many forms without departing from a spirit of this application and the scope of protection of the claims. All those shall fall within the protection of this application.

**Claims**

1. A channel estimation method, comprising:

   receiving, by a terminal, a pilot signal sent by a network-side device, wherein resource blocks RBs occupied by the pilot signal in a first time domain transmission unit and RBs occupied by the pilot signal in a second time domain transmission unit are at least partially different; and
   performing channel estimation on a third time domain transmission unit, based on the pilot signal in the first time domain transmission unit and the pilot signal in the second time domain transmission unit.

2. The channel estimation method according to claim 1, wherein the performing channel estimation on a third time domain transmission unit, based on the pilot signal in the first time domain transmission unit and the pilot signal in the second time domain transmission unit comprises:
   performing channel estimation, based on the pilot signal in the first time domain transmission unit, the pilot signal in the second time domain transmission unit, and a pre-trained neural network model, to obtain channels on all RBs in the third time domain transmission unit.

3. The channel estimation method according to claim 1, wherein the performing channel estimation on a third time domain transmission unit, based on the pilot signal in the first time domain transmission unit and the pilot signal in the second time domain transmission unit comprises:
   performing channel estimation, based on the pilot signal in the first time domain transmission unit, the pilot signal in the second time domain transmission unit, and a pre-trained neural network model, to obtain channels on all RBs in L time domain transmission units after a current time domain transmission unit, wherein L is a positive integer.

4. The channel estimation method according to claim 2 or 3, wherein all the RBs are RBs determined according to a predefined rule or a pre-configuration manner.

5. The channel estimation method according to claim 4, wherein the RBs determined according to the predefined rule or the pre-configuration manner comprise at least the RBs occupied by the pilot signal in a first time domain transmission unit and the RBs occupied by the pilot signal in a second time domain transmission unit.

6. The channel estimation method according to claim 2 or 3, wherein channel estimation is performed by using pilot signals in nearest K time domain transmission units for sending pilot signals, and K is a positive integer.

7. The channel estimation method according to claim 1, wherein the receiving, by a terminal, a pilot signal sent by a network-side device comprises:

   receiving, by the terminal, the pilot signal sent by the network-side device on a first RB in the first time domain transmission unit; and
   receiving, by the terminal, the pilot signal sent by the network-side device on a second RB in the second time domain transmission unit, wherein
   the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

8. The channel estimation method according to claim 7, wherein

   a number of the first RB is even, and a number of the second RB is odd; or
   the number of the first RB is odd, and the number of the second RB is even.

9. The channel estimation method according to claim 2 or 3, wherein the method further comprises:

   training to obtain the neural network model, wherein
   the step of training to obtain the neural network model comprises at least one of the following:

      an establishing step: establishing a neural network initial model;
      a training step: training the neural network initial model by using training data, to obtain a trained neural network initial model, wherein the training data comprises input data of the neural network initial model and corresponding actual channel data, the input data is channel estimation results of K consecutive time domain transmission units for sending pilot signals, a length of the channel estimation result of each time domain transmission unit is M×N, an output of the neural network initial model is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network initial model and the corresponding actual channel data is greater than or equal to a preset threshold or does not reach a preset quantity of iterations, returning to the training step; and if the mean square error between the output of the trained neural network initial model and the corresponding actual channel data is less than the preset threshold or reaches the preset quantity of iterations, using the trained neural network initial model as the neural network model.

10. The channel estimation method according to claim 9, wherein the step of training to obtain the neural network model comprises at least one of the following:

a training step: training the neural network model obtained by last training by using training data, to obtain a trained neural network model, wherein the training data comprises input data of the neural network model obtained by the last training and corresponding actual channel data, the input data is channel estimation results of K consecutive time domain transmission units for sending pilot signals, a length of a channel estimation result of each time domain transmission unit is M×N, an output of the neural network model obtained by the last training is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and

a determining step: if a mean square error between the output of the trained neural network model and the corresponding actual channel data is greater than or equal to the preset threshold or does not reach the preset quantity of iterations, returning to the training step; and if the mean square error between the output of the trained neural network model and the corresponding actual channel data is less than the preset threshold or reaches the preset quantity of iterations, using the trained neural network model as the neural network model.

11. The channel estimation method according to claim 9, wherein the neural network model comprises a first neural network model and a second neural network model; in input data for training the first neural network model, a pilot signal in a first time domain transmission unit of the K consecutive time domain transmission units for sending the pilot signals is sent on an RB with a number being even; and in input data for training the second neural network model, a pilot signal in a first time domain transmission unit of the K consecutive time domain transmission units for sending the pilot signals is sent on an RB with a number being odd.

12. The channel estimation method according to claim 11, wherein the performing channel estimation based on the neural network model comprises:
performing channel estimation by using the first neural network model if the received pilot signal in the first time domain transmission unit is sent on the RB with the number being even; and performing channel estimation by using the second neural network model if the received pilot signal in the first time domain transmission unit is sent on the RB with the number being odd.

13. The channel estimation method according to claim 1, wherein the pilot signal comprises at least one of the following: a channel state information reference signal CSI-RS, a sounding reference signal SRS, and a demodulation reference signal DMRS.

14. The channel estimation method according to claim 1, wherein the time domain transmission unit comprises any one of the following: a transmission time interval TTI, a subframe, a millisecond, a slot, and a symbol.

15. A channel estimation method, comprising:
sending, by a network-side device, a pilot signal, wherein resource blocks RBs occupied by the pilot signal in a first time domain transmission unit and RBs occupied by the pilot signal in a second time domain transmission unit are at least partially different.

16. The channel estimation method according to claim 15, wherein the sending, by a network-side device, a pilot signal comprises:

sending the pilot signal on a first RB of the first time domain transmission unit; and
sending the pilot signal on a second RB of the second time domain transmission unit, wherein
the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

17. The channel estimation method according to claim 16, wherein

a number of the first RB is even, and a number of the second RB is odd; or
the number of the first RB is odd, and the number of the second RB is even.

18. The channel estimation method according to claim 15, wherein the pilot signal comprises at least one of the following: a channel state information reference signal CSI-RS, a sounding reference signal SRS, and a demodulation reference signal DMRS.

19. The channel estimation method according to claim 15, wherein the time domain transmission unit comprises any one of the following: a transmission time interval TTI, a subframe, a millisecond, a slot, and a symbol.

20. A channel estimation apparatus, comprising:

a receiving module, configured to receive a pilot signal sent by a network-side device, wherein resource blocks RBs occupied by the pilot signal in a first time domain transmission unit and RBs occupied by the pilot signal in a second time domain transmission unit are at least partially different; and
a channel estimation module, configured to perform channel estimation on a third time domain transmission unit based on the pilot signal in the first time domain transmission unit and the pilot signal in the second time domain transmission unit.

21. The channel estimation apparatus according to claim 20, wherein the channel estimation module is specifically configured to perform channel estimation based on the pilot signal in the first time domain transmission unit, the pilot signal in the second time domain transmission unit, and a pre-trained neural network model, to obtain channels on all RBs in the third time domain transmission unit.

22. The channel estimation apparatus according to claim 20, wherein the channel estimation module is specifically configured to perform channel estimation based on the pilot signal in the first time domain transmission unit, the pilot signal in the second time domain transmission unit, and a pre-trained neural network model, to obtain channels on all RBs in L time domain transmission units after a current time domain transmission unit, wherein L is a positive integer.

23. The channel estimation apparatus according to claim 21 or 22, wherein all the RBs are RBs determined according to a predefined rule or a pre-configuration manner.

24. The channel estimation apparatus according to claim 23, wherein the RBs determined according to the predefined rule or the pre-configuration manner comprise at least the RBs occupied by the pilot signal in a first time domain transmission unit and the RBs occupied by the pilot signal in a second time domain transmission unit.

25. The channel estimation apparatus according to claim 21 or 22, wherein the channel estimation module is specifically configured to perform channel estimation by using pilot signals in nearest K time domain transmission units for sending pilot signals, and K is a positive integer.

26. The channel estimation apparatus according to claim 20, wherein the receiving module is specifically configured to receive the pilot signal sent by the network-side device on a first RB of the first time domain transmission unit; and
receive the pilot signal sent by the network-side device on a second RB of the second time domain transmission unit, wherein
the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

27. The channel estimation apparatus according to claim 26, wherein

a number of the first RB is even, and a number of the second RB is odd; or
the number of the first RB is odd, and the number of the second RB is even.

28. The channel estimation apparatus according to claim 21 or 22, wherein the apparatus further comprises: a training module, configured to train to obtain the neural network model, wherein
the step of training to obtain the neural network model comprises at least one of the following:

an establishing step: establishing a neural network initial model;
a training step: training the neural network initial model by using training data, to obtain a trained neural network initial model, wherein the training data comprises input data of the neural network initial model and corresponding actual channel data, the input data is channel estimation results of K consecutive time domain transmission units for sending pilot signals, a length of the channel estimation result of each time domain transmission unit is $M \times N$, an output of the neural network initial model is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and
a determining step: if a mean square error between the output of the trained neural network initial model and the corresponding actual channel data is greater than or equal to a preset threshold or does not reach a preset quantity of iterations, returning to the training step; and if the mean square error between the output of the trained neural network initial model and the corresponding actual channel data is less than the preset threshold or reaches the preset quantity of iterations, using the trained neural network initial model as the neural network model.

29. The channel estimation apparatus according to claim 28, wherein the training module is specifically configured to perform at least one of the following:

a training step: training the neural network model obtained by last training by using training data, to obtain a trained neural network model, wherein the training data comprises input data of the neural network model obtained by the last training and corresponding actual channel data, the input data is channel estimation results of K consecutive time domain transmission units for sending pilot signals, a length of a channel estimation result of each time domain transmission unit is $M \times N$, an output of the neural network model obtained by the last training is channel estimation results of N antennas on all M RBs in a $K^{th}$ time domain transmission unit for sending a pilot signal and L consecutive time domain transmission units after the $K^{th}$ time domain transmission unit, and M, N, K, and L are positive integers; and
a determining step: if a mean square error between the output of the trained neural network model and the corresponding actual channel data is greater than or equal to the preset threshold or does not reach the preset quantity of iterations, returning to the training step; and if the mean square error between the output of the trained neural network model and the corresponding actual channel data is less than the preset threshold or reaches the preset quantity of iterations, using the trained neural network model as the neural network model.

30. The channel estimation apparatus according to claim 28, wherein the neural network model comprises a first neural network model and a second neural network model; in input data for training the first neural network model, a pilot signal in a first time domain transmission unit of the K consecutive time domain transmission units for sending the pilot signals is sent on an RB with a number being even; and in input data for training the second neural network model, a pilot signal in a first time domain transmission unit of the K consecutive time domain transmission units for sending the pilot signals is sent on an RB with a number being odd.

31. The channel estimation apparatus according to claim 30, wherein the channel estimation module is specifically configured to perform channel estimation by using the first neural network model if the received pilot signal in the first time domain transmission unit is sent on the RB with the number being even; and perform channel estimation by using the second neural network model if the received pilot signal in the first time domain transmission unit is sent on the RB with the number being odd.

32. The channel estimation apparatus according to claim 20, wherein the pilot signal comprises at least one of the following:
a channel state information reference signal CSI-RS, a sounding reference signal SRS, and a demodulation reference signal DMRS.

33. The channel estimation apparatus according to claim 20, wherein the time domain transmission unit comprises any one of the following: a transmission time interval TTI, a subframe, a millisecond, a slot, and a symbol.

34. A channel estimation apparatus, comprising:
a sending module, configured to send a pilot signal, wherein resource blocks RBs occupied by the pilot signal in a first time domain transmission unit and RBs occupied by the pilot signal in a second time domain transmission unit are at least partially different.

35. The channel estimation apparatus according to claim 34, wherein the sending module is specifically configured to send the pilot signal on a first RB of the first time domain transmission unit; and send the pilot signal on a second RB of the second time domain transmission unit, wherein
the first RB is different from the second RB, the second time domain transmission unit is a closest time domain transmission unit for sending the pilot signal after the first time domain transmission unit, and at least one time domain transmission unit is spaced between the second time domain transmission unit and the first time domain transmission unit.

36. The channel estimation apparatus according to claim 35, wherein

a number of the first RB is even, and a number of the second RB is odd; or
the number of the first RB is odd, and the number of the second RB is even.

37. The channel estimation apparatus according to claim 34, wherein the pilot signal comprises at least one of the following:
a channel state information reference signal CSI-RS, a sounding reference signal SRS, and a demodulation reference signal DMRS.

38. The channel estimation apparatus according to claim 34, wherein the time domain transmission unit comprises any one of the following: a transmission time interval TTI, a subframe, a millisecond, a slot, and a symbol.

39. A terminal, comprising a processor, a memory, and a program or instructions stored in the memory and runnable on the processor, wherein when executed by the processor, the program or the instructions implement steps of the channel estimation method according to any one of claims 1 to 14.

40. A network-side device, comprising a processor, a memory, and a program or instructions stored in the memory and runnable on the processor, wherein when executed by the processor, the program or instructions implement steps of the channel estimation method according to any one of claims 15 to 19.

41. A readable storage medium, wherein the readable storage medium stores a program or instructions, wherein when executed by the processor, the program or the instructions implement steps of the channel estimation method according to any one of claims 1 to 19.

Network-side device

11

11

Terminal

Terminal

FIG. 1

| A terminal receives a pilot signal sent by a network-side device, where resource blocks RBs occupied by the pilot signal in a first time domain transmission unit and RBs occupied by the pilot signal in a second time domain transmission unit are at least partially different | 101 |

| Perform channel estimation on a third time domain transmission unit based on the pilot signal in the first time domain transmission unit and the pilot signal in the second time domain transmission unit | 102 |

FIG. 2

A network-side device sends a pilot signal, where resource blocks occupied by the pilot signal in different time domain transmission units are at least partially different, and resource blocks occupied by the pilot signal in a first time domain transmission unit and resource blocks occupied by the pilot signal in a second time domain transmission unit are at least partially different

201

## FIG. 3

Channel state information reference signal resource block

Data resource block

## FIG. 4

1 TTI

1 PRB

1   2   3   4   ...

Channel state information reference signal resource block

Data resource block

Estimated channel resource block

FIG. 5

300

Terminal

310

Receiving module

320

Channel estimation module

FIG. 6

400

Network-side device

410

Sending module

FIG. 7

500

Communication device

501

Processor

502

Memory

FIG. 8

1000

```
1001 ~ | Radio frequency unit |                    | Network module | ~ 1002

              1010 ~
1009 ~ | Memory                    |                    | Audio output unit | ~ 1003
        | Application program |          |              |
        | Operating system    |          | Processor |   | Input unit          | ~ 1004
                                         |           |   | Graphics processing unit | ~ 10041
1008 ~ | Interface unit        |          |           |   | Microphone          | ~ 10042

        1007 ~
10071 ~ | User input unit       |          |           |   | Display unit        | ~ 1006
        | Touch panel         |          |           |   | Display panel       | ~ 10061
10072 ~ | Another input device |         |           |

                                    | Sensor | ~ 1005
```

FIG. 9

FIG. 10

FIG. 11

Multi-head attention

FIG. 12

```
        ┌─────────────────────┐
        │       Matrix        │
        │   multiplication    │
        └─────────────────────┘
             ▲              ▲
             │              │
        ┌─────────────────┐ │
        │      Index      │ │
        │  normalization  │ │
        └─────────────────┘ │
             ▲              │
             │              │
        ┌─────────────────┐ │
        │     Shield      │ │
        └─────────────────┘ │
             ▲              │
             │              │
        ┌─────────────────┐ │
        │      Scale      │ │
        └─────────────────┘ │
             ▲              │
             │              │
        ┌─────────────────┐ │
        │     Matrix      │ │
        │  multiplication │ │
        └─────────────────┘ │
          ▲         ▲       │
          │         │       │
          Q         K       V
```

FIG. 13

## INTERNATIONAL SEARCH REPORT

| | International application No. |
|---|---|
| | **PCT/CN2022/126226** |

**A.    CLASSIFICATION OF SUBJECT MATTER**

H04L 25/02(2006.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 多输入多输出, MIMO, 导频, 信道状态信息参考信号, CSI-RS, 探测参考信号, SRS, 解调参考信号, DMRS, 资源块, RB, 不同, 信道估计, 神经网络, 传输时间间隔, TTI, 帧, 时隙, 符号, multiple input multiple output, channel state information reference signal, resource block, sounding reference signal, demodulation reference signal, different, channel estimation, transmission time interval, frame, slot, signal

**C.    DOCUMENTS CONSIDERED TO BE RELEVANT**

| Category* | Citation of document, with indication, where appropriate, of the relevant passages | Relevant to claim No. |
|---|---|---|
| A | CN 109565433 A (GUANGDONG OPPO MOBILE COMMUNICATIONS CO., LTD.) 02 April 2019 (2019-04-02)<br>entire document | 1-41 |
| A | CN 112204898 A (HUAWEI TECHNOLOGIES CO., LTD.) 08 January 2021 (2021-01-08)<br>entire document | 1-41 |
| A | CN 105812113 A (QUALCOMM INC.) 27 July 2016 (2016-07-27)<br>entire document | 1-41 |
| A | WO 2021175444 A1 (NOKIA TECHNOLOGIES OY) 10 September 2021 (2021-09-10)<br>entire document | 1-41 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 January 2023** | **12 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 109565433 | A | 02 April 2019 | US | 2020374171 | A1 | 26 November 2020 |
| | | | | WO | 2018018510 | A1 | 01 February 2018 |
| | | | | IL | 264480 | A | 28 February 2019 |
| | | | | BR | 112019001723 | A2 | 07 May 2019 |
| | | | | US | 2019334749 | A1 | 31 October 2019 |
| | | | | PH | 12019500192 | A1 | 14 October 2019 |
| | | | | ZA | 201901172 | B | 18 December 2019 |
| | | | | MX | 2019001219 | A | 03 June 2019 |
| | | | | SG | 11201900777 X | A | 27 February 2019 |
| | | | | AU | 2016416207 | A1 | 14 March 2019 |
| | | | | JP | 2019527968 | A | 03 October 2019 |
| | | | | CA | 3032007 | A1 | 01 February 2018 |
| | | | | RU | 2713430 | C1 | 05 February 2020 |
| | | | | EP | 3474482 | A1 | 24 April 2019 |
| | | | | TW | 201804837 | A | 01 February 2018 |
| | | | | KR | 20190034577 | A | 02 April 2019 |
| CN | 112204898 | A | 08 January 2021 | None | | | |
| CN | 105812113 | A | 27 July 2016 | TW | 200845666 | A | 16 November 2008 |
| | | | | US | 2008165891 | A1 | 10 July 2008 |
| | | | | JP | 2010516111 | A | 13 May 2010 |
| | | | | EP | 2100423 | A2 | 16 September 2009 |
| | | | | IN | 3664CHENP2009 | A | 18 June 2010 |
| | | | | JP | 2013013114 | A | 17 January 2013 |
| | | | | US | 2013235946 | A1 | 12 September 2013 |
| | | | | WO | 2008086110 | A2 | 17 July 2008 |
| | | | | CN | 102801664 | A | 28 November 2012 |
| | | | | BR | PI0806279 | A2 | 06 September 2011 |
| | | | | RU | 2411681 | C1 | 10 February 2011 |
| | | | | US | 2012155425 | A1 | 21 June 2012 |
| | | | | JP | 2012165398 | A | 30 August 2012 |
| | | | | CN | 101578836 | A | 11 November 2009 |
| | | | | CA | 2672318 | A1 | 17 July 2008 |
| WO | 2021175444 | A1 | 10 September 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111234895